# EUROPEAN PATENT APPLICATION

(11) **EP 2 522 848 A2**
(43) Date of publication of application: **14.11.2012**
(21) Application number: 12382159.7
(22) Date of filing: 26.04.2012
(51) Int. Cl.: F03B 13/16, F03G 3/06

(54) **Active pendulum energy generator**

(30) Priority: 12.05.2011 ES 201130766
(71) Applicant: Novedades Tecnologicas S.L., 39002 Santander Cantabria (ES)
(72) Inventor: Jauregui Carro, Francisco, Javier, 39002 Santander (Cantabria) (ES); Gómez Jáuregui, Valentín, 39002 Santander (Cantabria) (ES)
(74) Representative: Carpintero Lopez, Francisco

(57) **Abstract**

The present invention relates to an active pendulum energy generator, comprising a support structure (1) assembled in a floating body (2) that can float in a water mass (M) heeling in response to waves (W), a pendulum (3) suspended by an arm (4) in a point of oscillation (5) in the upper part of the support structure (1) and capable of generating kinetic energy when it oscillates back and forth, passing through a vertical position (V), between end positions in response to heel movements of the floating body (2) caused by the waves (W), an electricity generating device (6) driven by the kinetic energy generated by the oscillations of the pendulum (3), and a retaining system to retain the pendulum (3) alternately in each of said end positions until the floating body (2) has reached respective predetermined maximum heel positions (M1, M2) in response to the waves (W), wherein the end position in which the pendulum (3) is retained is located in a horizontal plane (H1) that is higher than the horizontal plane (H2, H3) of another end position, and to release the pendulum (3) so that it moves, passing through said vertical position (V), towards another end position when the floating body (2) has passed the corresponding predetermined maximum heel position (M1, M2).

## Description

### Technical Field of the Invention

The present invention belongs to the technical field of floating electrical power generation systems which harness movements caused by surge to convert them into kinetic energy and from that to electrical energy. The present invention is particularly comprised in the sector of energy generating devices incorporating kinetic energy generating pendulums.

### Background of the Invention

Multiple electricity generators which harness the movement of a floating body moved by waves to generate mechanical energy by means of different types of mechanisms which are coupled to electricity generating devices to convert that mechanical energy into electrical energy are known today.

Generators of this type are described, for example, in Spanish patent application ES-2231041-A1, which relates to a pendulum generator converting the energy derived from the movement of the waves into electrical energy, characterized in that it is formed by a pendulum suspended by an arm in a support structure with respect to which it can freely oscillate in any direction within 360º. In its oscillating movements with respect to the support structure, the pendulum generates mechanical energy which is supplied to one or several transformers, converting it into electrical energy.

Although the pendulum generator described in Spanish patent application ES-2231041-A1 offers the possibility of effectively producing electrical energy, its efficiency can still be improved.

### Description of the Invention

The object of the present invention is to increase the efficiency of pendulum energy generators of the state of the art described above by means of an active pendulum energy generator, comprising a support structure assembled in a floating body that can float in a water mass heeling in response to waves, a pendulum suspended by an arm in a point of oscillation in the upper part of the support structure and capable of generating kinetic energy, and an electricity generating device driven by the kinetic energy generated by the oscillations of the pendulum, and characterized in that
the pendulum is designed to oscillate back and forth, passing through a vertical position, between end positions in response to heel movements of the floating body caused by the waves;
it comprises a retaining system to retain the pendulum alternately in each of said end positions until the floating body has reached respective predetermined maximum heel positions in response to the waves, wherein the respective end position in which the pendulum is retained is located in a horizontal plane that is higher than the horizontal plane of another end position, and to release the pendulum so that it moves, passing through said vertical position, towards another end position when the floating body has passed the corresponding predetermined maximum heel position.

The retaining system according to the present invention successfully retains the pendulum in its end position such that when it is released once it has passed the corresponding maximum heel position caused by the passage of a wave and, therefore, the pendulum is released to move towards another end position, its movement or "fall" towards another end position generates and releases more mechanical energy than the free back and forth pendular movement of the pendulum generators of the state of the art.
In a first embodiment of the invention, the electricity generating device is housed in the floating body under the pendulum and is connected to a transmission system to transmit the kinetic energy generated by the pendulum to the electricity generating device, and it comprises
a gear system connected to a drive shaft of the electricity generating device;
a plurality, such as three for example, of drive cables each connected at its first end to the pendulum and at its second end to said gear system;
a plurality of reversing pulleys peripherally assembled in the lower part of the support structure in respective peripheral positions equiangular to one another, each of the reversing pulleys guiding one of the drive cables in its trajectory from the pendulum towards the gear system.

According to this first embodiment, the retaining system can comprise respective peripheral blocking elements that can be connected to the reversing pulleys to block at least the reversing pulley closest to the pendulum when it is located in its end position in said higher horizontal plane, and to release the reversing pulleys when the floating body has passed the corresponding predetermined maximum heel position.

In this first embodiment, the transmission system can further comprise respective guide pulleys assembled in an equiangular manner in an area surrounding the vertical of the pendulum and respectively guiding one of the drive cables in its trajectory from the corresponding reversing pulley towards the gear system. In this case, the retaining system can alternatively or complementarily comprise respective central blocking elements that can be connected to the reversing pulleys to block at least the reversing pulley through which the drive cable passes which in turn passes through the reversing pulley closest to the pendulum when it is located in its end position in said higher horizontal plane, and to release the reversing pulley when the floating body has passed the corresponding predetermined maximum heel position.

The gear system present in the first embodiment of the pendulum generator according to the present invention can comprise a plurality of input pulleys provided with respective input pinions, each input pulley being connected to the second end of one of the drive cables. These input pinions can independently engage a gear ring assembled in the drive shaft of the electricity generating device, such that only that or those pinions corresponding to the cable or cables driven by the pendulum in its movement from one end position to the next are coupled to the gear ring and therefore to the drive shaft at all times, while the pinion or pinions corresponding to non-driven cables is decoupled to thereby prevent the movement of these latter pinions from causing mechanical energy losses.

When a gear system of this type is present, the retaining system can comprise respective lower blocking elements that can be connected to the input pulleys to block at least the input pulley through which the drive cable passes which in turn passes through the reversing pulley closest to the pendulum when it is located in its end position in said higher horizontal plane, and to release the input pulley when the floating body has passed the corresponding predetermined maximum heel position. Likewise, in this case the retaining system can comprise respective interlocking elements that can be interlocked with the input pinions of the respective input pulleys to block at least the input pinion of the input pulley through which the drive cable passes which in turn passes through the reversing pulley closest to the pendulum when it is located in its end position in said higher horizontal plane, and to release the input pinion when the floating body has passed the corresponding predetermined maximum heel position.

In a second embodiment of the invention, the pendulum generator comprises a plurality of electricity generating devices arranged in peripheral positions with respect to the end positions reached by the pendulum when oscillating back and forth, and a transmission system to transmit the kinetic energy generated by the pendulum to the electricity generating device. This transmission system comprises
respective drive arms each coupled to one of the electricity generating devices. Each drive arm has a free end and an opposite end part coupled to the corresponding electricity generating device and is movable between an extended position and a retracted position such that its movement between said positions drives the electricity generating device to which it is coupled, and the pendulum being arranged between the free ends of the drive arms such that when it oscillates to one of said end positions, it pushes at least one of the drive arms towards its retracted position.

According to this second embodiment, the retaining system can comprise at least one retaining rib emerging from the lower surface of the pendulum and a plurality of retaining mechanisms each arranged in a radial position in correspondence with one of the drive arms. Each retaining mechanism comprises a retaining flange movable between a retaining position in which it interacts with the retaining rib while the pendulum is located in its corresponding end position.

In a third embodiment of the pendulum energy generator according to the invention, the electricity generating device comprises an inductor assembled in the pendulum and an armature extending under the pendulum between the end positions between which the pendulum oscillates. The inductor can have a convex-curved front with a radius of curvature coinciding with the arc of movement of the shaft of the arm of the pendulum, while the upper surface of the armature preferably has a convex-curved configuration having a complementary curvature. The irregular electric current generated must be rectified.

In this third embodiment, the retaining system can comprise a plurality, such as three for example, of retaining cables each connected at its first end to the pendulum and at its second end to said gear system; a plurality of retaining pulleys assembled peripherally in the lower part of the support structure in respective peripheral positions equiangular to one another, each retaining cable passing through one of the retaining pulleys; and respective peripheral blocking elements that can be connected to the retaining pulleys to block at least the retaining pulley closest to the pendulum when it is located in its end position in said higher horizontal plane, and to release the retaining pulleys when the floating body has passed the corresponding predetermined maximum heel position.

As can be inferred from the foregoing, the present invention meets the object described above in an effective manner and by means of a simple, functional and economical structure.

### Brief Description of the Drawings

Aspects and embodiments of the invention are described below on the basis of various drawings, in which
Figure 1 is a partially sectioned side elevational schematic view of an embodiment of a pendulum generator provided with a retaining system according to a first embodiment of the present invention, in its rest position;
Figure 2 is a partially sectioned top plan view of the generator shown in Figure 1;
Figure 3 is a view corresponding to Figure 1 in which the pendulum generator is in the working position;
Figure 4 is a view corresponding to Figure 3 in which the pendulum generator is in the working position;
Figure 5 is a partially sectioned side elevational schematic view of another embodiment of a pendulum generator provided with a retaining system according to a second embodiment of the present invention in its rest position;
Figure 6 is a bottom plan view of an embodiment of the gear system of Figure 5, with its pinions disengaged;
Figure 7 is a top plan view of an embodiment of the gear system of Figure 5, with its pinions disengaged;
Figure 8 is a top cross-section view of the generator along line A-A shown in Figure 5;
Figure 9 is a partially sectioned top plan view of the generator shown in Figure 5, in the working position;
Figure 10 shows the position of the gear system when the generator is in the working position shown in Figure 5;
Figure 11 shows how the pendulum of the pendulum generator of Figure 5 reaches a first end stand-by position from the rest position until the generator is in a first heel position;
Figure 12 shows the arrangement adopted by the gear system in the phases shown in Figure 11;

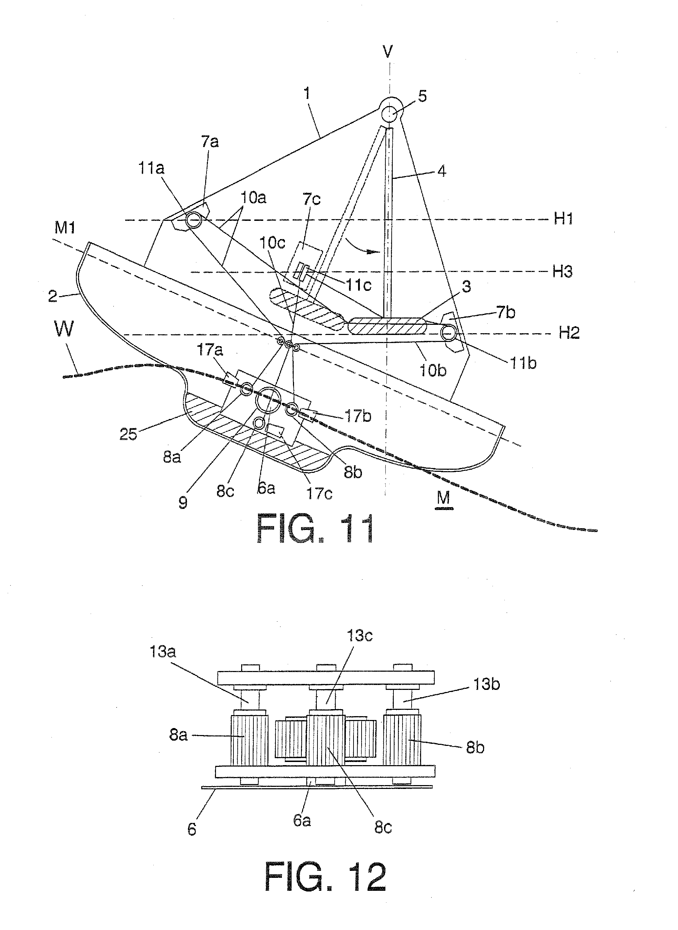

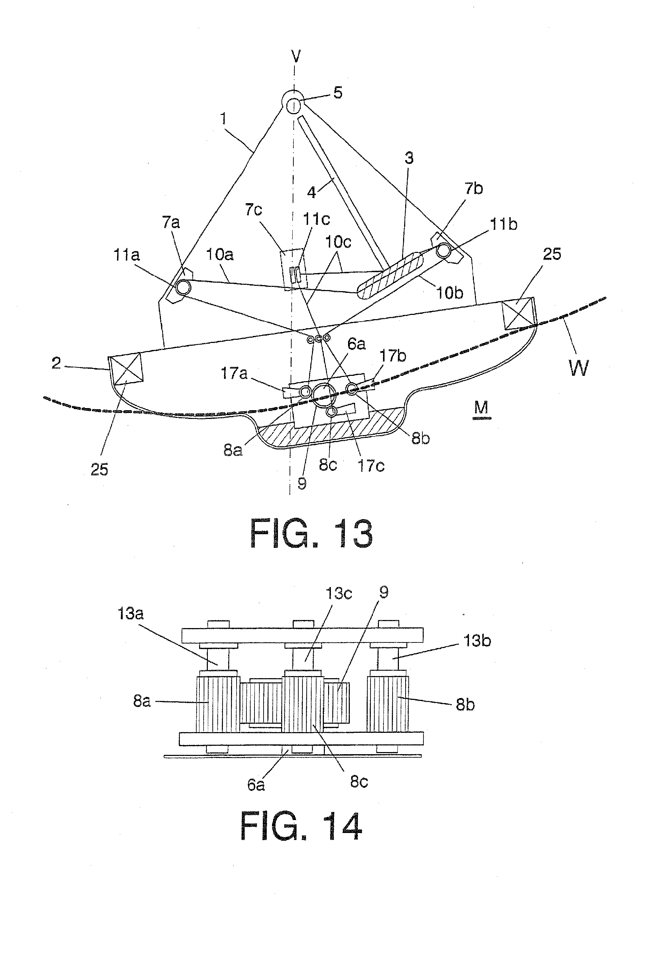

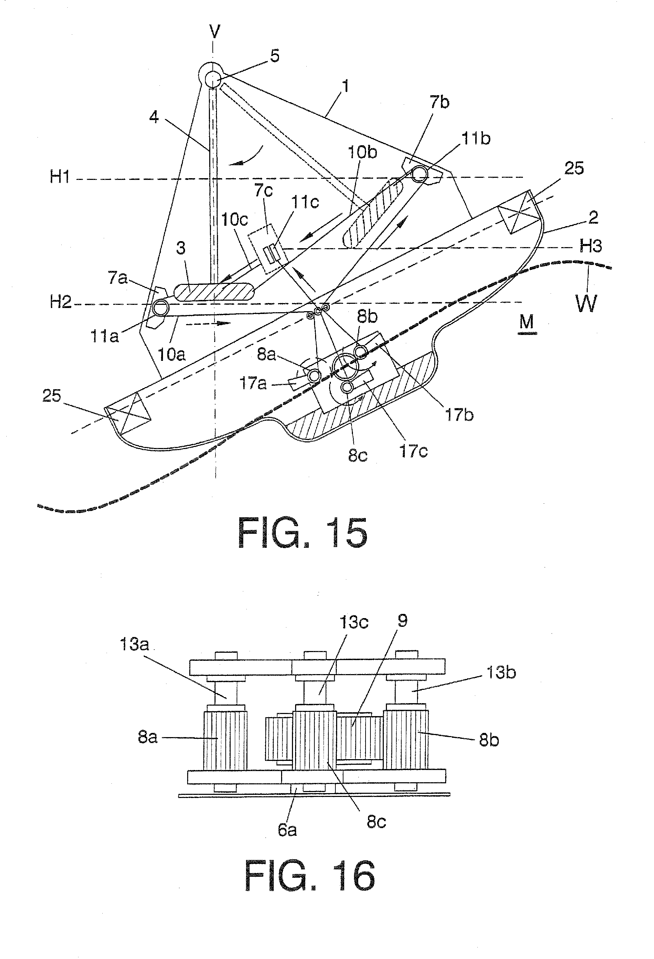

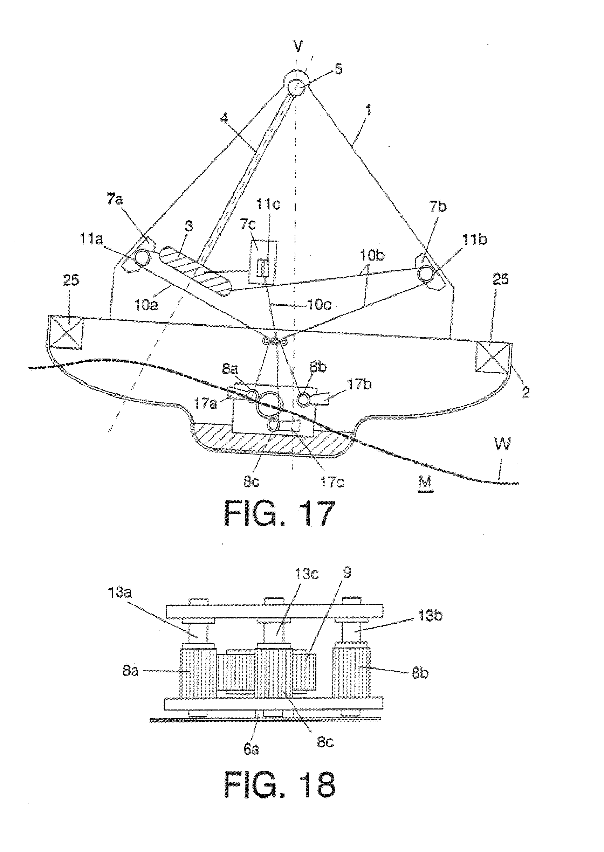

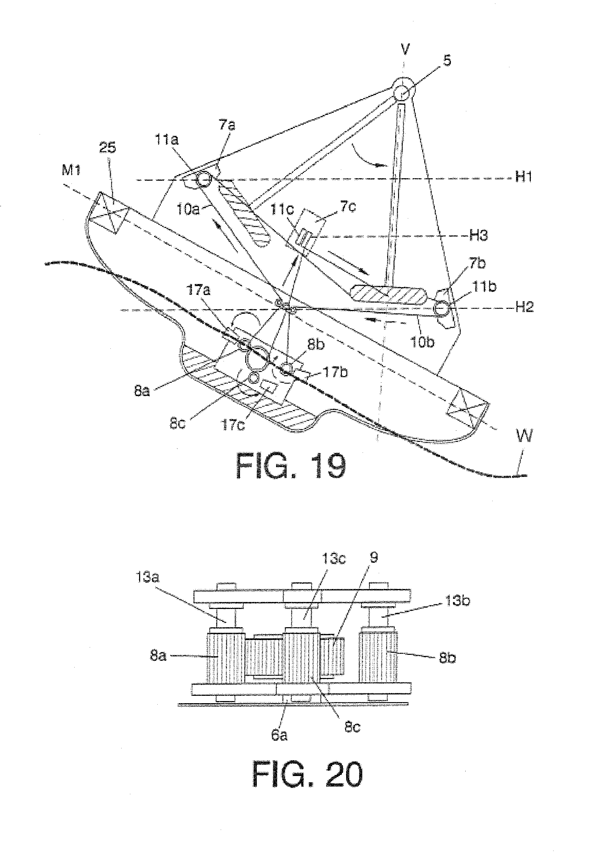

Figures 12-20 show following successive heel phases of the generator and corresponding positions of the generator, as well as corresponding positions successively adapted by the gear system;

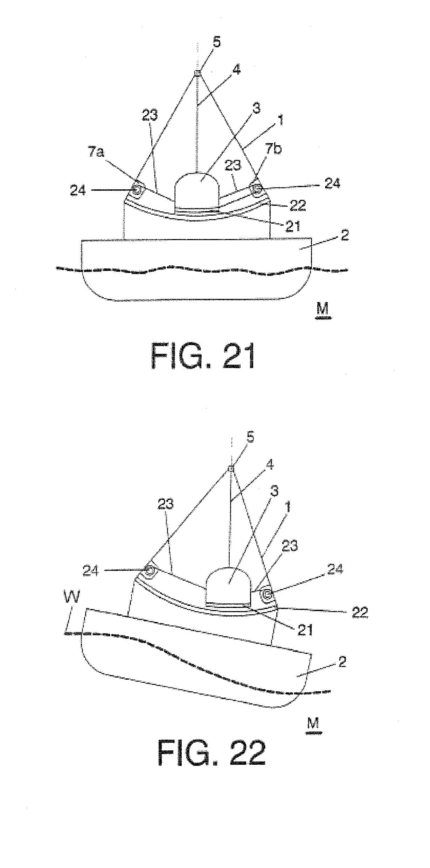

Figure 21 is a partially sectioned side elevational schematic view of another embodiment of a pendulum generator provided with a retaining system according to a third embodiment of the present invention, in its rest position;
Figure 22 is a view corresponding to Figure 21, in which the pendulum generator is in the working position.

The following elements are identified by references numbers in these drawings:
- 1: support structure
- 1a, 1b, 1c: peripheral positions
- 2: floating body
- 3: pendulum
- 4: arm
- 4': ties
- 5: point of oscillation
- 6: electricity generating device
- 6a: drive shaft of the electricity generating device
- 7a, 7b, 7c: peripheral blocking elements
- 8a, 8b, 8c: gear system
- 9: gear ring
- 10a, 10b, 10c: drive cables
- 11a, 11 b, 11c: reversing pulleys
- 12a, 12b, 12c: guide pulleys
- 13a, 13b, 13c: input pulleys
- 14: arrangement area of the input pulleys
- 15a, 15b, 15c: central blocking elements
- 16a, 16b, 16c: lower blocking elements
- 17a, 17b, 17c: interlocking elements
- 18: drive arms
- 18a: free end
- 18b: opposite end part
- 19: retaining rib
- 20: retaining mechanism
- 20a: retaining flange
- 21: inductor
- 22: armature
- 23: retaining cables
- 24: retaining pulleys
- 25: counterweight
- H1, H2, H3: horizontal planes
- M1, M2: predetermined maximum heel positions
- M: water mass
- W: waves
- V: vertical position

### Embodiments of the Invention

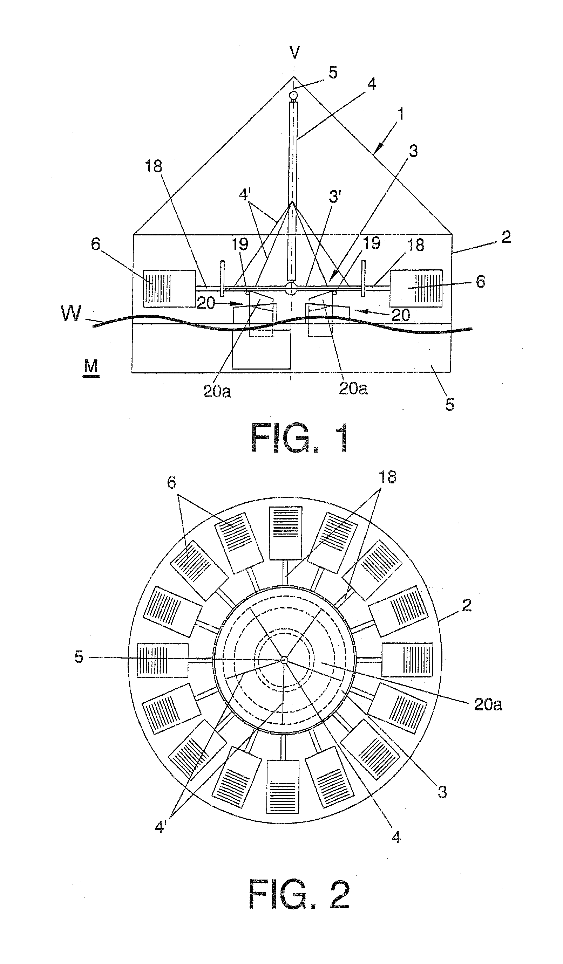

Figures 1 to 4 illustrate a first embodiment of the active pendulum energy generator, comprising a support structure -1- assembled in a floating body -2- that can float in a water mass -M- heeling in response to waves -W-. It further comprises a pendulum -3- suspended by an arm -4- in a point of oscillation -5- in the upper part of the support structure -1- and capable of generating kinetic energy, as well as an electricity generating device -6- driven by the kinetic energy generated by the oscillations of the pendulum -3-. The pendulum -3- is attached to the arm -4- by means of a plurality of ties-4'- and is designed to oscillate back and forth, passing through a vertical position, between end positions in response to heel movements of the floating body -2- caused by the waves -W-.

According to this first embodiment, the pendulum energy generator also comprises a plurality of electricity generating devices -6- arranged in peripheral positions with respect to the end positions reached by the pendulum -3- when oscillating back and forth, and a transmission system to transmit the kinetic energy generated by the pendulum -3- to the electricity generating devices -6-. The transmission system comprises a plurality of drive arms -18- each coupled to one of the electricity generating devices -6-. Each drive arm -18- comprises a free end -18a-and an opposite end part -18b- coupled to the corresponding electricity generating device -6- and is movable between an extended position and a retracted position such that its movement between said positions drives the electricity generating device -6- to which it is coupled. The pendulum -3- is arranged between the free ends -18a- of the drive arms -18- such that when it oscillates to one of said end positions, it pushes at least one of the drive arms -18- towards its retracted position.

The retaining system comprises a retaining rib -19- emerging from the lower surface of the pendulum -3- as well as a plurality of retaining mechanisms -20- each arranged in a radial position in correspondence with one of the drive arms -18-. Each retaining mechanism -20- comprises a retaining flange -20a- movable between a retaining position in which it protrudes and engages the retaining rib -19- while the pendulum -3- is located in its corresponding end position, and a release position in which it is retracted to release the pendulum -3- when the floating body -2- has passed the corresponding predetermined maximum heel position.

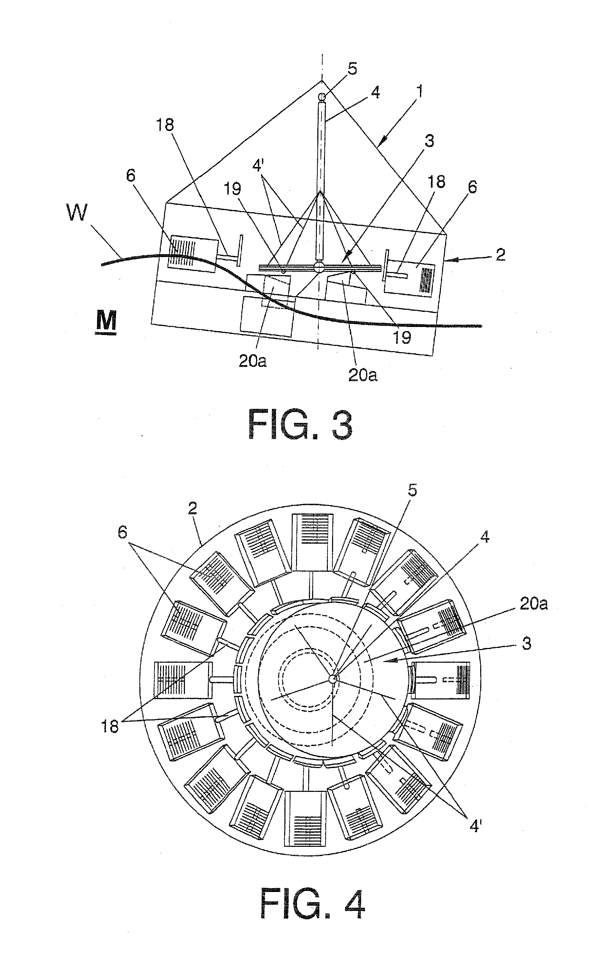

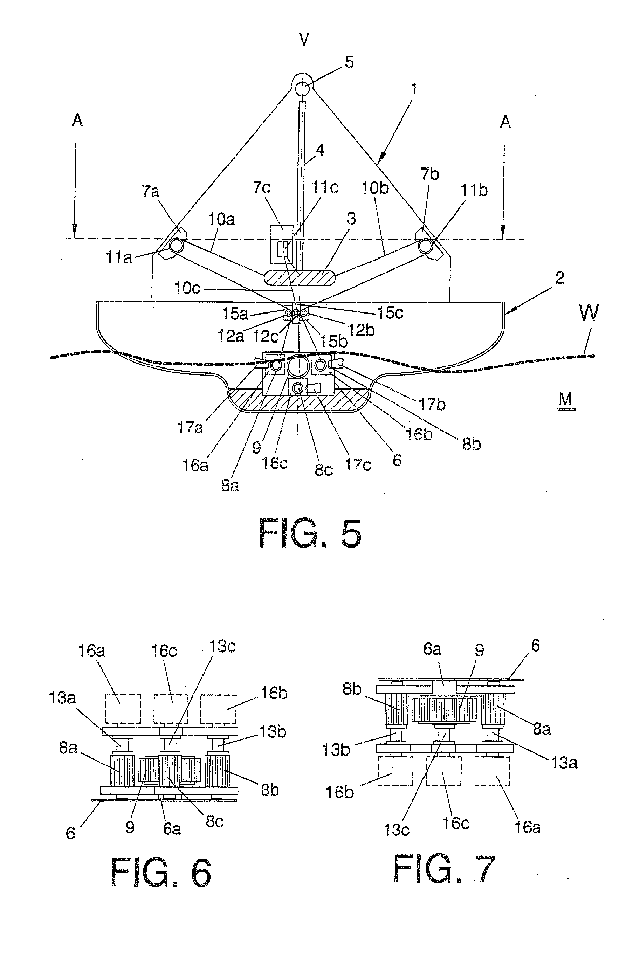

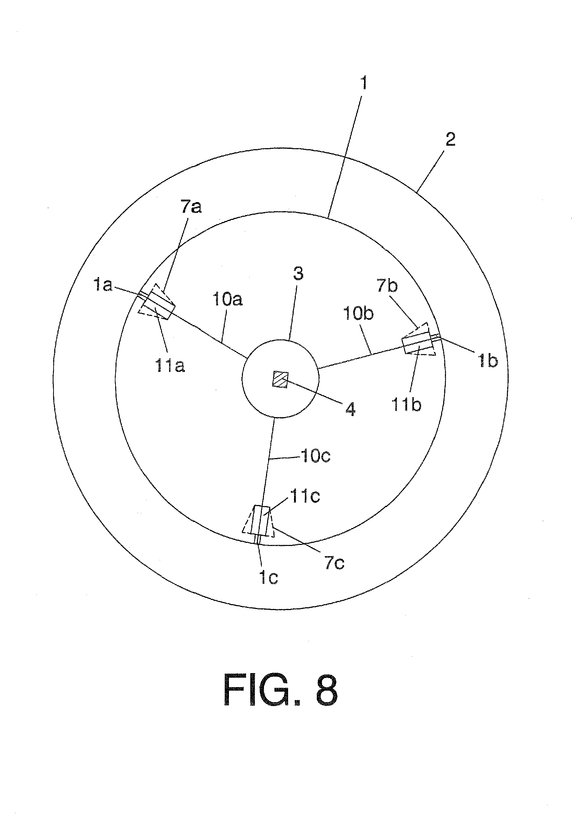

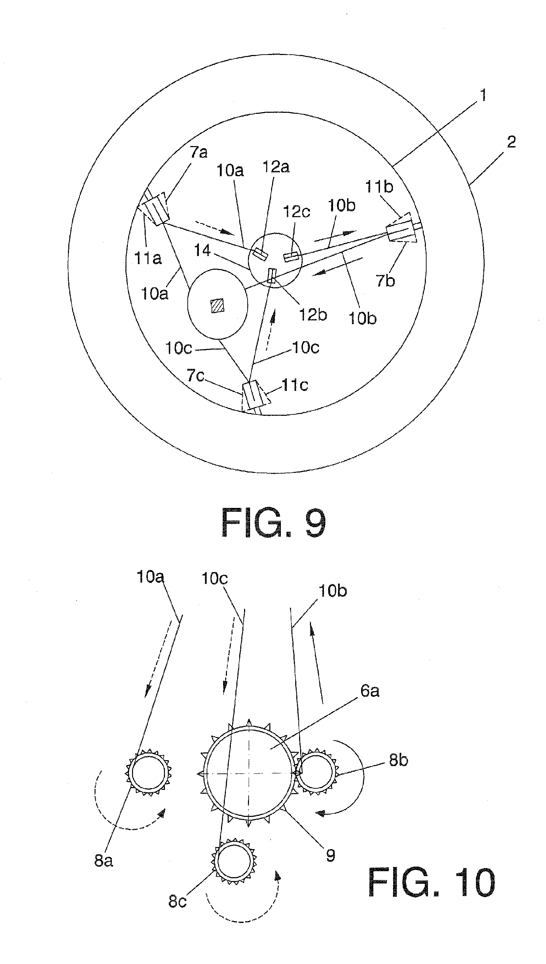

In the second embodiment of the pendulum energy generator illustrated in Figures 4 to 20, said generator also comprises a support structure -1- assembled in a floating body -2- having a circular cross section that can float in a water mass -M-heeling in response to waves -W-. A ballast mass -25- extending completely or partially around the entire perimeter of the float is located in the upper part of the floating body - 2-. The generator further comprises a pendulum -3- suspended by an arm -4- in a point of oscillation -5- in the upper part of the support structure -1- and capable of generating kinetic energy, as well as an electricity generating device -6- driven by the oscillations of the pendulum -3-. The pendulum -3- is also designed to oscillate back and forth, passing through a vertical position -V-, between end positions in response to heel movements of the floating body -2- caused by the waves -W-.

According to this second embodiment, it is capable of retaining the pendulum -3- alternately in each of said end positions until the floating body -2- has reached respective predetermined maximum heel positions -M1, M2- in response to the waves -W-, in which the respective end position in which the pendulum -3- is retained is located in a horizontal plane -H1- that is higher than the horizontal plane -H2, H3- of another end position, and to release the pendulum -3- so that it moves, passing through said vertical position -V-, towards another end position when the floating body -2- has passed the corresponding predetermined maximum heel position -M1, M2-. The electricity generating device -6- is housed in the floating body -2- under the pendulum -3- and is connected to a transmission system to transmit the kinetic energy generated by the pendulum -3- to the electricity generating device -6-.

The transmission system comprises a gear system -8a, 8b, 8c; 9- connected to a drive shaft -6a- of the electricity generating device -6-, three drive cables -10a, 10b, 10c- each connected at its first end to the pendulum -3- and at its second end to said gear system -8a, 8b, 8c, 9-; and three reversing pulleys -11a, 11 b, 11c- peripherally assembled in the lower part of the support structure -1- in respective peripheral positions -1 a, 1b, 1 c- equiangular to one another, each of the reversing pulleys -11 a, 11 b, 11c- guiding one of the drive cables -10a, 10b, 10c- in its trajectory from the pendulum -3- towards the gear system -8a, 8b, 8c; 9-. The reversing pulleys -11a, 11 b, 11c- are assembled equiangular to one another at 120º angles. The retaining system further comprises respective peripheral blocking elements -7a, 7b, 7c- that can be connected to the reversing pulleys -11a, 11 b, 11 c- to block at least the reversing pulley -11a, 11 b, 11c- closest to the pendulum -3- when it is located in its end position in said higher horizontal plane -H1-, and to release the reversing pulleys -11 a, 11 b, 11 c- when the floating body -2- has passed the corresponding predetermined maximum heel position -M1, M2-, as well as three guide pulleys -12a, 12b, 12c- assembled in an equiangular manner in an area -14- surrounding the vertical of the pendulum -3- and respectively guiding one of the drive cables -10a, 10b, 10c- in its trajectory from the corresponding reversing pulley -11a, 11b, 11c- towards the gear system -8a, 8b, 8c; 9-. Each of the reversing pulleys -11a, 11 b, 11c- can be blocked by a central blocking element -15a, 15b, 15c- that can be connected to the reversing pulley -11a, 11 b, 11c-blocking the reversing pulley -11 a, 11 b, 11c- through which the drive cable -10a, 10b, 10c- passes which in turn passes through the reversing pulley -11a, 11 b, 11c- closest to the pendulum -3- when it is located in its end position in said higher horizontal plane -H1-, and releases the reversing pulley -11a, 11 b, 11c- when the floating body -2- has passed the corresponding predetermined maximum heel position -M1, M2-.

The gear system -8a, 8b, 8c; 9- comprises a plurality of input pulleys -13a, 13b, 13c- provided with respective input pinions -8a, 8b, 8c-, each input pulley -13a, 13b, 13c- being connected to the second end of one of the drive cables -10a, 10b, 10c-. The input pinions -8a, 8b, 8c- can independently engage a gear ring -9- assembled in the drive shaft -6a- of the electricity generating device -6-. Respective lower blocking elements -16a, 16b, 16c- that can be connected to the input pulleys -13a, 13b, 13c- to block at least the input pulley -13a, 13b, 13c- through which the drive cable -10a, 10b, 10c- passes which in turn passes through the reversing pulley -11a, 11 b, 11c- closest to the pendulum -3- when it is located in its end position in said higher horizontal plane -H1-, and to release the input pulley -13a, 13b, 13c- when the floating body -2- has passed the corresponding predetermined maximum heel position -M1, M2- are also provided. Respective interlocking elements -17a, 17b, 17c- that can be interlocked with the input pinions -14a, 14b, 14c- of the respective input pulleys -13a, 13b, 13c- to block at least the input pinion -14a, 14b, 14c- of the input pulley -13a, 13b, 13c- through which the drive cable -10a, 10b, 10c- passes which in turn passes through the reversing pulley -11 a, 11 b, 11 c- closest to the pendulum -3- when it is located in its end position in said higher horizontal plane -H1-, and to release the input pinion -14a, 14b, 14c- when the floating body -2- has passed the corresponding predetermined maximum heel position -M1, M2- are likewise provided.

In the third embodiment shown in Figures 21 and 22, the pendulum energy generator comprises, as in the first and second embodiments described above, a support structure -1- assembled in a floating body -2- that can float in a water mass -M-heeling in response to waves -W-. It further comprises a pendulum -3- suspended by an arm -4- in a point of oscillation -5- in the upper part of the support structure -1- and capable of generating kinetic energy, as well as an electricity generating device -6-driven by the oscillations of the pendulum -3-. The pendulum -3- is attached to the arm -4- by means of a plurality of ties-4'-, and is designed to oscillate back and forth, passing through a vertical position, between end positions in response to heel movements of the floating body -2- caused by the waves -W-. According to this third embodiment, the electricity generating device -6- comprises an inductor -21-assembled in the pendulum -3- and an armature -22- assembled in the lower part of the support structure such that it extends under the pendulum -3- between the end positions between which the pendulum -3- oscillates. According to this embodiment, the retaining system comprises a plurality of retaining cables -23- each connected at its first end to the pendulum -3- and at its second end to said gear system -8a, 8b, 8c, 9-, a plurality of retaining pulleys -24- assembled peripherally in the lower part of the support structure -1- in respective peripheral positions equiangular to one another, each retaining cable -23- passing through one of the retaining pulleys -24-, as well as respective peripheral blocking elements -7a, 7b- that can be connected to the retaining pulleys -11 a, 11b- to block at least the retaining pulley -24- closest to the pendulum -3-when it is located in its end position in said higher horizontal plane -H1-, and to release the retaining pulleys -24- when the floating body -2- has passed the corresponding predetermined maximum heel position -M1, M2-. For the purpose of simplifying the graphic depiction, Figures 21 and 22 show only two retaining cables -23-, two peripheral blocking elements -7a, 7b- and two retaining pulleys -24-, though it is implied that there can also be more of these elements, such as three of each for example, in which case the retaining pulleys -24- with their respective blocking elements, assembled equiangular to one another at 120º angles.

## Claims

1. Active pendulum energy generator, comprising a support structure (1) assembled in a floating body (2) that can float in a water mass (M) heeling in response to waves (W), a pendulum (3) suspended by an arm (4) in a point of oscillation (5) in the upper part of the support structure (1) and capable of generating kinetic energy, and an electricity generating device (6) driven by the kinetic energy generated by the oscillations of the pendulum (3), **characterized in that**
the pendulum (3) is designed to oscillate back and forth, passing through a vertical position (V), between end positions in response to heel movements of the floating body (2) caused by the waves (W);
it comprises a retaining system to retain the pendulum (3) alternately in each of said end positions until the floating body (2) has reached respective predetermined maximum heel positions (M1, M2) in response to the waves (W), wherein the respective end position in which the pendulum (3) is retained is located in a horizontal plane (H1) that is higher than the horizontal plane (H2, H3) of another end position, and to release the pendulum (3) so that it moves, passing through said vertical position (V), towards another end position when the floating body (2) has passed the corresponding predetermined maximum heel position (M1, M2).

2. Pendulum energy generator according to claim 1, **characterized in that** the electricity generating device (6) is housed in the floating body (2) under the pendulum (3) and is connected to a transmission system to transmit the kinetic energy generated by the pendulum (3) to the electricity generating device (6), comprising
a gear system (8a, 8b, 8c; 9) connected to a drive shaft (6a) of the electricity generating device (6);
a plurality of drive cables (10a, 10b, 10c) each connected at its first end to the pendulum (3) and at its second end to said gear system (8a, 8b, 8c, 9);
a plurality of reversing pulleys (11 a, 11 b, 11c) peripherally assembled in the lower part of the support structure (1) in respective peripheral positions (1a, 1b, 1c) equiangular to one another, each of the reversing pulleys (11a, 11 b, 11c) guiding one of the drive cables (10a, 10b, 10c) in its trajectory from the pendulum (3) towards the gear system (8a, 8b, 8c; 9).

3. Pendulum energy generator according to claim 2, **characterized in that** it comprises three drive cables (10a, 10b, 10c) guided by respective reversing pulleys (11 a, 11 b, 11c) assembled equiangular to one another at 120º angles.

4. Pendulum energy generator according to claim 2, 3 or 4, **characterized in that** the retaining system comprises respective peripheral blocking elements (7a, 7b, 7c) that can be connected to the reversing pulleys (11 a, 11 b, 11 c) to block at least the reversing pulley (11 a, 11 b, 11c) closest to the pendulum (3) when it is located in its end position in said higher horizontal plane (H1), and to release the reversing pulleys (11a, 11 b, 11c) when the floating body (2) has passed the corresponding predetermined maximum heel position (M1, M2).

5. Pendulum energy generator according to claim 2, 3 or 4, **characterized in that** the transmission system further comprises respective guide pulleys (12a, 12b, 12c) assembled in an equiangular manner in an area (14) surrounding the vertical of the pendulum (3) and respectively guiding one of the drive cables (10a, 10b, 10c) in its trajectory from the corresponding reversing pulley (11a, 11 b, 11c) towards the gear system (8a, 8b, 8c; 9).

6. Pendulum energy generator according to claim 5, **characterized in that** the retaining system comprises respective central blocking elements (15a, 15b, 15c) that can be connected to the reversing pulleys (11a, 11 b, 11c) to block at least the reversing pulley (11a, 11 b, 11c) through which the drive cable (10a, 10b, 10c) passes which in turn passes through the reversing pulley (11a, 11b, 11c) closest to the pendulum (3) when it is located in its end position in said higher horizontal plane (H1), and to release the reversing pulley (11a, 11 b, 11c) when the floating body (2) has passed the corresponding predetermined maximum heel position (M1, M2).

7. Pendulum energy generator according to any one of claims 2 to 6, **characterized in that**
the gear system (8a, 8b, 8c; 9) comprises a plurality of input pulleys (13a, 13b, 13c) provided with respective input pinions (8a, 8b, 8c);
each input pulley (13a, 13b, 13c) is connected to the second end of one of the drive cables (10a, 10b, 10c);
the input pinions (8a, 8b, 8c) can independently engage a gear ring (9) assembled in the drive shaft (6a) of the electricity generating device (6).

8. Pendulum energy generator according to claim 7, **characterized in that** the retaining system comprises respective lower blocking elements (16a, 16b, 16c) that can be connected to the input pulleys (13a, 13b, 13c) to block at least the input pulley (13a, 13b, 13c) through which the drive cable (10a, 10b, 10c) passes which in turn passes through the reversing pulley (11a, 11 b, 11c) closest to the pendulum (3) when it is located in its end position in said higher horizontal plane (H1), and to release the input pulley (13a, 13b, 13c) when the floating body (2) has passed the corresponding predetermined maximum heel position (M1, M2).

9. Pendulum energy generator according to claim 7 or 8, **characterized in that** the retaining system comprises respective interlocking elements (17a, 17b, 17c) that can be interlocked with the input pinions (14a, 14b, 14c) of the respective input pulleys (13a, 13b, 13c) to block at least the input pinion (14a, 14b, 14c) of the input pulley (13a, 13b, 13c) through which the drive cable (10a, 10b, 10c) passes which in turn passes through the reversing pulley (11 a, 11 b, 11c) closest to the pendulum (3) when it is located in its end position in said higher horizontal plane (H1), and to release the input pinion (14a, 14b, 14c) when the floating body (2) has passed the corresponding predetermined maximum heel position (M1, M2).

10. Pendulum energy generator according to claim 1, **characterized in that** it comprises a plurality of electricity generating devices (6) arranged in peripheral positions with respect to the end positions reached by the pendulum (3) when oscillating back and forth, and a transmission system to transmit the kinetic energy generated by the pendulum (3) to the electricity generating devices (6), comprising respective drive arms (18) each coupled to one of the electricity generating devices (6), each drive arm (18) comprising a free end (18a) and an opposite end part (18b) coupled to the corresponding electricity generating device (6), each drive arm (18) being movable between an extended position and a retracted position such that its movement between said positions drives the electricity generating device (6) to which it is coupled, and the pendulum (3) being arranged between the free ends (18a) of the drive arms (18) such that when it oscillates to one of said end positions, it pushes at least one of the drive arms (18) towards its retracted position.

11. Pendulum energy generator according to claim 10, **characterized in that** the retaining system comprises
at least one retaining rib (19) emerging from the lower surface of the pendulum (3);
a plurality of retaining mechanisms (20) each arranged in a radial position in correspondence with one of the drive arms (18) ;
each retaining mechanism (20) comprises a retaining flange (20a) movable between a retaining position in which it interacts with the retaining rib (19) while the pendulum (3) is located in its corresponding end position.

12. Pendulum energy generator according to claim 1, **characterized in that** the electricity generating device (6) comprises an inductor (21) assembled in the pendulum (3) and an armature (22) extending under the pendulum (3) between the end positions between which the pendulum (3) oscillates.

13. Pendulum energy generator according to claim 12, **characterized in that** the retaining system comprises
a plurality of retaining cables (23) each connected at its first end to the pendulum (3) and at its second end to said gear system (8a, 8b, 8c, 9);
a plurality of retaining pulleys (24) assembled peripherally in the lower part of the support structure (1) in respective peripheral positions (1 a, 1 b) equiangular to one another, each retaining cable (23) passing through one of the retaining pulleys (24);
respective peripheral blocking elements (7a, 7b) that can be connected to the retaining pulleys (11 a, 11 b, 11 c) to block at least the retaining pulley (24) closest to the pendulum (3) when it is located in its end position in said higher horizontal plane (H1), and to release the retaining pulleys (24) when the floating body (2) has passed the corresponding predetermined maximum heel position (M1, M2).

14. Pendulum energy generator according to claim 13, **characterized in that** it comprises three retaining cables (23) guided by respective retaining pulleys (24) assembled equiangular to one another at 120º angles.
